# EUROPÄISCHE PATENTSCHRIFT

(11) **EP 2 549 607 B1**
(45) Veröffentlichungstag und Bekanntmachung des Hinweises auf die Patenterteilung: **12.02.2014**
(21) Anmeldenummer: 12174319.9
(22) Anmeldetag: 29.06.2012
(51) Int. Cl.: H02H 1/06

(54) **Schalter mit einem prüfbaren Stromwandler und Verfahren zum Prüfen eines Stromwandlers eines Schalters**
Switch with a testable electricity converter and method for testing an electricity converter on a switch
Commutateur avec un convertisseur de courant contrôlable et procédé de contrôle du convertisseur de courant d'un commutateur

(30) Priorität: 20.07.2011 DE 102011079461
(43) Veröffentlichungstag der Anmeldung: 23.01.2013
(73) Patentinhaber: Siemens Aktiengesellschaft, 80333 München (DE)
(72) Erfinder: Driehorn, Thomas, 12207 Berlin (DE); Müller, Gerd, 14612 Falkensee (DE)

(56) Entgegenhaltungen:
- DE-A1-102004 011 027

## Beschreibung

Die Erfindung betrifft einen Schalter mit einem prüfbaren Stromwandler, insbesondere einen Leistungsschalter für Niederspannungen, und ein Verfahren zum Prüfen eines Stromwandlers eines Schalters gemäß den Oberbegriffen der Ansprüche 1 und 2.

Schalter, insbesondere in Form von Leistungsschaltern für Niederspannungen, sind bekannt und dienen zum Unterbrechen eines durch einen Leiter fließenden elektrischen Wechselstroms. Sie werden zur Verteilung des Stromes in elektrischen Schaltanlagen und zu deren Schutz eingesetzt. Die Schalter verfügen über Schaltkontakte, die zum Öffnen des Schalters durch einen Schaltmechanismus voneinander getrennt werden. Am Leiter angeordnete Stromwandler in Form einer Luftspule (Rogowskispule) dienen als Messwandler und erzeugen eine zum Wechselstrom korrespondierende analoge Messspannung, wobei der Leiter als Primärwicklung fungiert. Anhand der Messspannung erfolgt die Auslösung des Schalters parameter- und kennlinienabhängig bei anhaltender Überlast oder bei einem Kurzschluss. Eine elektronische Auslöseeinheit wird dazu mit der Messspannung beaufschlagt und vergleicht diese mit einem vorgegebenen Schwellwert, bei dessen Überschreitung eine Trennung der Schaltkontakte ausgelöst wird.

Zur Stromversorgung (Eigenversorgung) der Auslöseeinheit werden Energiewandler (meist Eisenkernwandler) eingesetzt, die ebenfalls am Leiter angeordnet sind. Die Zuverlässigkeit der Stromversorgung hängt maßgeblich vom Energiewandler ab. Leitungsunterbrechungen oder Kontaktprobleme der Energiewandler können zum Totalausfall der Schutzfunktion des Schalters führen.

An den Energiewandler ist eine Gleichrichterschaltung angeschlossen, die einen Kondensator auflädt, der die Stromversorgung speist, wobei eine Schalteinrichtung die Gleichrichterschaltung jeweils bei Erreichen einer vorgegebenen Kondensatorspannung (Nennspannung) kurzschließt, um diese in etwa konstant zu halten.

Bei einem Drei-Phasen-Stromnetz wird der Strom aus den Energiewandlern z.B. mittels eines um den Null-Leiter-Eingang erweiterten Drehstrom-Brückengleichrichters gleichgerichtet. In diesem Falle wird die Schaltung um einen Null-Leiter-Sternpunkt erweitert. Als Energiespeicher kommt hier ein Kondensator zum Einsatz. Eine Schalteinrichtung z.B. in Form eines parallel geschalteten Leistungstransistors schließt bei Erreichen der Kondensator-Nennspannung den Energiewandler kurz und verhindert so deren weiteres Ansteigen.

Bei dieser Schaltungsvariante kann der Strom jedes einzelnen Energiewandlers nicht differenziert für jeden Kanal ausgewertet werden. Dadurch kann auch nicht festgestellt werden, welcher Energiewandlereingang Energie liefert und welcher nicht, insbesondere da im Drehstrom-Brückengleichrichter Ausgleichsströme zwischen den Energiewandlern fließen.

Nachteilig ist bei den bekannten Stromversorgungen, dass eine kontinuierliche Überprüfung der Energiewandler nicht möglich ist. Eine mögliche Beschädigung und damit eine Nicht-Funktion des Schalters kann nicht erkannt und gemeldet werden, so dass Anlagenbetreiber keinen sofortigen Austausch der Energiewandler bzw. des Schalters veranlassen können.

Aus der DE 690 13 683 T2 ist bereits ein Überstromrelais für elektrische Anlagen bekannt, das einen Energiewandler nach Art eines Transformators zur Stromversorgung einer Elektronik, insbesondere einer Auslöseeinheit, aufweist. Neben dem Energiewandler ist ein Messwandler vorhanden, der aus Stromfühlwiderständen gebildet ist. Der Energiewandler ist an eine Gleichrichterschaltung angeschlossen, die einen Kondensator auf eine vorgegebene Spannung auflädt. Weiter weist das Überstromrelais ein Monoflop auf, dem ein vom Energiewandler abgegriffenes Signal über eine elektronische Schaltung zugeführt wird. Auf das Monoflop ist ein UND-Gatter geschaltet, das bei Überlast ein Überlastsignal liefert. Das Überlastsignal des UND-Gatters triggert den Monoflop, der einen Transistorschalter veranlasst, zu leiten, um das Überstromrelais auszulösen. Das Monoflop wird genutzt, um einen Impuls von ausreichender Länge zu erzeugen und damit die Auslösung des Überstromrelais jeweils sicherzustellen, da die Impulslänge des UND-Gatters dafür nicht immer ausreicht.

Insbesondere aus der DE 10 2004 011 027 ist bereits ein Überstromrelais für ein mehrphasiges elektrisches Netz bekannt, das zur Sicherstellung der Schutzfunktion mehrere voneinander getrennte Messwandler und zur Stromversorgung seiner Auslöseeinheit pro Phase einen Energiewandler aufweist, wobei die Energiewandler gemeinsam einen Kondensator speisen.

Die Aufgabe der Erfindung ist es, ein Verfahren für eine Stromversorgung eines Schalters mit mehreren einen Kondensator speisenden Energiewandlern vorzuschlagen, mit dem es technisch einfach feststellbar ist, welcher Energiewandler Energie liefert und welcher nicht, bzw. einen Schalter mit einer entsprechenden Prüfbarkeit der einzelnen Energiewandler vorzuschlagen, um die Schutzfunktion des Schalters sicherzustellen.

Die Erfindung wird bezogen auf den Schalter und bezogen auf das Verfahren durch die Merkmale der Ansprüche 1 und 2 gelöst; der Unteranspruch stellt eine vorteilhafte Ausgestaltung dar.

Die Lösung sieht bezogen auf den Schalter vor, dass der Eingang eines Monoflops an einen Pol des Energiewandlers angeschlossen ist, dass die Wandlerspannung den Monoflop setzt, dass jeweils eine vorgegebene Zeit bis zum Zurücksetzen des Monoflops vorgesehen ist und dass der Pegel am Ausgang des Monoflops zum Prüfen die Funktion des Energiewandlers dient.

Die Lösung sieht bezogen auf das Verfahren vor, dass ein Monoflop an einen Pol des Stromwandlers angeschlossen wird, jeweils von der Wandlerspannung gesetzt wird und jeweils nach einer vorgegebenen Zeit zurückgesetzt wird und dass zum Prüfen des Stromwandlers der Pegel am Ausgang des Monoflops verwendet wird, wobei ein (zumindest jeweils zeitweise) vorhandener Pegel die korrekte Funktion des Stromwandlers anzeigt.

Mit Vorteil wird vorgeschlagen, dass der Pegel als digital verarbeitbares Signal ausgegeben wird.

Die Erfindung wird nachfolgend anhand eines Ausführungsbeispiels näher beschrieben.

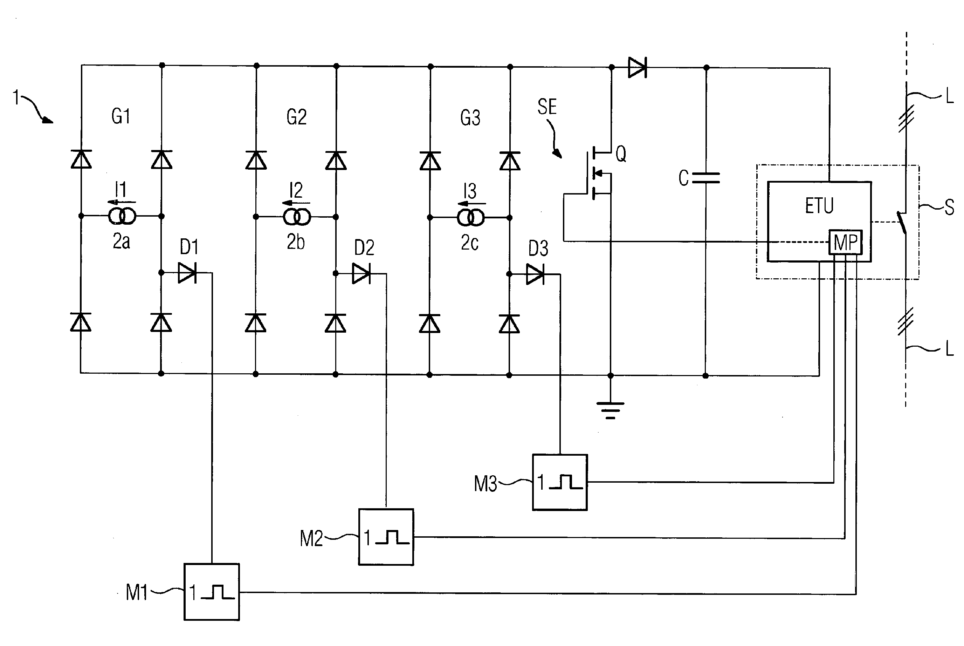

Die einzige Figur zeigt eine Stromversorgung 1 für eine Auslöseeinheit ETU eines Schalters S (nur schematisch gezeigt), bei dem es sich um einen Leistungsschalter für Niederspannungen handelt. Der Schalter S dient zum Unterbrechen von elektrischen Drei-Phasen-Wechselströmen 11, 12, 13, wobei alle drei Phasen-Leiter L durch den Schalter S verlaufen.

Die Schalter S werden zur Verteilung des Stromes in elektrischen Schaltanlagen und zu deren Schutz eingesetzt. Sie verfügen über Schaltkontakte, die zum Öffnen des Schalters S durch einen Schaltmechanismus voneinander getrennt werden. An den Leitern L angeordnete Luftspulen (Rogowskispulen) dienen als Messwandler und erzeugen eine zum Wechselstrom korrespondierende analoge Messspannung, wobei der Leiter jeweils als Primärwicklung fungiert. Anhand der Messspannung erfolgt die Auslösung des Schalters S parameter- und kennlinienabhängig bei anhaltender Überlast oder bei einem Kurzschluss. Die elektronische Auslöseeinheit ETU weist einen Mikroprozessor MP auf, wird mit der Messspannung beaufschlagt und vergleicht diese mit einem vorgegebenen Schwellwert, bei dessen Überschreitung eine Trennung der Schaltkontakte ausgelöst wird.

Zur Stromversorgung 1 der Auslöseeinheit ETU sind Eisenkernwandler als Energiewandler 2a, 2b, 2c am jeweils zugehörigen Leiter angeordnet.

An den Eisenkernwandlern ist für jede Phase jeweils ein Brückengleichrichter als Gleichrichterschaltung G1, G2, G3 angeschlossen. Die Brückengleichrichter sind parallel geschaltet und laden gemeinsam einen Pufferkondensator C auf, der die Stromversorgung 1 speist, wobei ein Transistor Q als spezielle Schalteinrichtung SE die Gleichrichterschaltung jeweils bei Erreichen einer vorgegebenen Kondensatorspannung kurzschließt, die auf diese Weise konstant gehalten wird.

Es wird also allgemein gesagt ein Signal abgegriffen, welches zur Erkennung eines Stromflusses aus dem Energiewandler 2a, 2b, 2c (Eisenkernwandler) dient. Jeder primäre Stromfluss führt zu einem sekundären Stromfluss im Energiewandler 2a, 2b, 2c und somit zu einem aus der Gleichrichterschaltung G1, G2, G3 (Brückengleichrichter) ableitbaren Signal. Dieses Signal wird dazu verwendet, zu erkennen, ob jeder Energiewandler 2a, 2b, 2c Strom liefert oder nicht. Die Amplitude und das Puls-Pausen-Verhältnis dieses Signals sind von der Höhe des Primärstromes bzw. dem Sekundärstrom des Energiewandlers 2a, 2b, 2c sowie der Taktung des Kurzschlusstransistors (bestimmt durch die Stromaufnahme des Überstromauslösers und den aktuellen Füllgrad des Pufferkondenstors C) abhängig.

An einem Pol jedes Energiewandlers 2a, 2b, 2c ist über eine Diode D1, D2, D3 jeweils der Eingang eines nachtriggerbaren Monoflops M1, M2, M3 (monostabile Kippstufe) angeschlossen, um das abgegriffene schwierig zu bewertende Signal zu erfassen, wobei die Wandlerspannung den Monoflop M1, M2, M3 (periodisch) auf einen vorgegebenen High-Pegel (Ausgangs-Spannung) setzt. Die Lösung besteht also darin, das abgegriffene Signal (ggf. nach weiterer Aufbereitung, Verstärkung und Begrenzung mittels eines Komparators) auf den Triggereingang eines nachtriggerbaren Monoflops zu führen. Dessen Ausgang bleibt aktiv (High-Pegel), solange regelmäßig Signale vom Energiewandler 2a, 2b, 2c abgeleitet werden. Bleiben diese Signale mangels Stromfluss durch den Energiewandler aus, z.B. durch Drahtbruch oder sonstigem Defekt, wird der Ausgang nach einer durch die Zeitkonstante des Monoflops bestimmten Zeit deaktiviert, d.h. spätestens nach einer vorgegebenen Zeit auf seinen Low-Pegel (zurück) gesetzt. Der High-Pegel am Ausgang des Monoflops zeigt also jeweils die korrekte Funktion des zugehörigen Energiewandlers 2a, 2b, 2c an.

Die Ausgangssignale (Low-Pegel, High-Pegel) des nachtriggerbaren Monoflops M1, M2, M3 werden digital erfasst und zusammen mit den Messspannungen (der Rogowskispulen) weiter verarbeitet. Die Auswertung die Energiewandlerströme mittels Monoflop M1, M2, M3 erfolgt unabhängig von der Amplitude und der sich einstellenden Kurvenform. Auch nichtsinusförmige Energiewandlerstrome, welche pulsförmig auftreten, führen durch die Nachtriggerbarkeit des Monoflops auch mit kurzen Impulsen zu einer sicheren Prüfung.

Die beiden Pegel des Monoflops sind also digital verarbeitbar und werden zur Weiterverarbeitung zweckmäßigerweise ohne Zwischenstufe direkt an den Mikroprozessor MP der Auslöseeinheit ETU angeschlossen werden.

Alternativ kann auch einfach eine Anzeige an den Ausgang des Monoflops angeschlossen werden, die im einfachsten Fall eine Leuchtdiode als Leuchtelement aufweist, welche jeweils den High-Pegel am Ausgang des Monoflops anzeigt.

## Patentansprüche

1. Schalter (S) zum Unterbrechen von elektrischen Wechselströmen, die durch mehrere Leiter fließen, die durch den Schalter (S) geführt sind,
mit Schaltkontakten, deren Trennung zum Öffnen des Schalters (S) durch einen Schaltmechanismus erfolgt,
mit Messwandlern, die an den Leitern angeordnet sind und eine zum Wechselstrom korrespondierende analoge Messspannung erzeugen,
mit einer elektronischen Auslöseeinheit (ETU), die mit der Messspannung beaufschlagt ist, jeweils einen von der Messspannung abgeleiteten Strom mit einer Strombedingung vergleicht und bei Erfüllung der Strombedingung die Trennung der Schaltkontakte durch den Schaltmechanismus auslöst, und
mit an jedem Leiter angeordneten Energiewandlern (2a, 2b, 2c) nach Art eines Eisenkernwandlers, die jeweils eine Wandlerspannung abgeben und an die jeweils eine Gleichrichterschaltung (G1, G2, G3) angeschlossenen ist, die einen Kondensator (C) auf eine vorgegebene Kondensatorspannung aufladen, der die Stromversorgung (1) der Auslöseeinheit (ETU) speist,
**dadurch gekennzeichnet,**
**dass** die Gleichrichterschaltungen jeweils mit einem Monoflop (M1, M2, M3) verbunden sind, deren Ausgänge jeweils abhängig vom Funktionieren des zugehörigen Energiewandlers (2a, 2b, 2c) von der Wandlerspannung entsprechenden Signalen jeweils auf einen vorgegebenen Pegel gesetzt sind,
**dass** eine Schalteinrichtung (SE) die Gleichrichterschaltungen (G1, G2, G3) jeweils bei Erreichen der vorgegebenen Kondensatorspannung kurzschließt,
**dass** jeder Monoflop (M1, M2, M3) gesetzt bleibt, wenn in einer durch die Zeitkonstante des Monoflops bestimmten Zeit am Ausgang des zugehörigen Energiewandlers ein Signal auftritt, und dass der Pegel am Ausgang des Monoflops (M1, M2, M3) zum Prüfen der Funktion des zugehörigen Energiewandlers (2a, 2b, 2c) dient.

2. Verfahren zum Prüfen von mehreren Energiewandlern (2a, 2b, 2c) einer Stromversorgung (1) eines Schalters (S),
wobei jeder Energiewandler (2a, 2b, 2c) jeweils an einem Leiter angeordnet ist und eine analoge Wandlerspannung erzeugt, die zum Wechselstrom korrespondiert, der durch den zugehörigen Leiter fließt, und
wobei der Schalter (S)
- mit Schaltkontakten versehen ist, die zum Öffnen des Schalters (S) durch einen Schaltmechanismus voneinander getrennt werden,
- Messwandler aufweist, die an den Leitern angeordnet sind und eine zum Wechselstrom korrespondierende analoge Messspannung erzeugen,
- eine elektronische Auslöseeinheit (ETU) umfasst, die mit der Messspannung beaufschlagt wird, jeweils einen von der Messspannung abgeleiteten Strom mit einer Strombedingung vergleicht und bei Erfüllung der Strombedingung die Trennung der Schaltkontakte durch den Schaltmechanismus auslöst, und
- an den Energiewandlern (2a, 2b, 2c) angeschlossene Gleichrichterschaltungen (G1, G2, G3) aufweist, die einen angeschlossenen Kondensator (C) auf eine vorgegebene Kondensatorspannung aufladen, der die Stromversorgung (1) der Auslöseeinheit (ETU) speist,
**dadurch gekennzeichnet,**
**dass** die Gleichrichterschaltungen
ein der Wandlerspannung entsprechendes Signal jeweils auf einen zugehörigen Monoflop (M1, M2, M3) geben, der von dem Signal auf einen vorgegebenen Pegel am Ausgang des Monoflops (M1, M2, M3) gesetzt wird und
bei dem der Pegel vom Funktionieren des zugehörigen Energiewandlers (2a, 2b, 2c) abhängt,
**dass** die Gleichrichterschaltung (G1, G2, G3) jeweils bei Erreichen der vorgegebenen Kondensatorspannung kurzgeschlossen wird,
**dass** jeder Monoflop (M1, M2, M3) gesetzt bleibt, wenn innerhalb einer durch die Zeitkonstante des Monoflops bestimmten Zeit am Ausgang des zugehörigen Energiewandlers ein Signal auftritt, und dass der Pegel zum Prüfen des Energiewandlers (2a, 2b, 2c) verwendet wird.

3. Verfahren nach Anspruch 2,
**dadurch gekennzeichnet,**
**dass** der Pegel als digital verarbeitbares Signal ausgegeben wird.

## Claims

1. Switch (S) for interrupting alternating electric currents, which flow through a plurality of conductors which are led through the switch (S),
comprising switching contacts which are separated by means of a switching mechanism in order to open the switch (S),
comprising measurement transformers which are arranged at the conductor and which generate an analog measurement voltage corresponding to the alternating current,
comprising an electronic trip unit (ETU) to which the measurement voltage is applied and which compares in each case a current derived from the measurement voltage with a current condition and, if the current condition is fulfilled, triggers the separation of the switching contacts by means of the switching mechanism, and
comprising power transformers (2a, 2b, 2c) in the form of an iron-cored transformer arranged at each conductor, which power transformers output in each case a transformer voltage and to which power transformers are connected in each case a rectifier circuit (G1, G2, G3) which charge a capacitor (C) to a predefined capacitor voltage, this capacitor feeding the power supply (1) of the trip unit (ETU), **characterized in that** the rectifier circuits are connected in each case to a monostable multivibrator (M1, M2, M3), the outputs of which are set in each case to a predefined level depending in each case on the operation of the associated power transformer (2a, 2b, 2c) by signals corresponding to the transformer voltage,
**in that** a switching device (SE) short-circuits the rectifier circuits (G1, G2, G3) in each case when the predefined capacitor voltage is reached,
**in that** each monostable multivibrator (M1, M2, M3) remains set, when a signal occurs at the output of the associated power transformer in a time determined by the time constant of the monostable multivibrator,
and **in that** the level at the output of the monostable multivibrator (M1, M2, M3) is used to test the operation of the associated power transformer (2a, 2b, 2c).

2. Method for testing a plurality of power transformers (2a, 2b, 2c) of a power supply (1) of a switch (S),
each power transformer (2a, 2b, 2c) being arranged in each case at a conductor and generating an analog transformer voltage corresponding to the alternating current flowing through the associated conductor, and the switch (S),
- being provided with switching contacts which are separated from one another by means of a switching mechanism in order to open the switch (S),
- having measurement transformers which are arranged at the conductors and which generate an analog measurement voltage corresponding to the alternating current,
- comprising an electronic trip unit (ETU) to which the measurement voltage is applied and which compares in each case a current derived from the measurement voltage with a current condition and, if the current condition is fulfilled triggers the separation of the switching contacts by means of the switching mechanism, and
- having rectifier circuits (G1, G2, G3) connected to the power transformers (2a, 2b, 2c), which rectifier circuits charge a connected capacitor (C) to a predefined capacitor voltage, this capacitor feeding the power supply (1) of the trip unit (ETU),
**characterized**
**in that** the rectifier circuits pass in each case a signal corresponding to the transformer voltage to an associated monostable multivibrator (M1, M2, M3) which is set by the signal to a predefined level at the output of the monostable multivibrator (M1, M2, M3) and
in which the level depends on the operation of the associated power transformer (2a, 2b, 2c),
**in that** the rectifier circuit (G1, G2, G3) is short-circuited in each case when the predefined capacitor voltage is reached, in that each monostable multivibrator (M1, M2, M3) remains set, when a signal occurs at the output of the associated power transformer within a time determined by the time constant of the monostable multivibrator,
and **in that** the level is used to test the power transformer (2a, 2b, 2c).

3. Method according to Claim 2,
**characterized in that** the level is output as a digitally processable signal.

## Revendications

1. Commutateur ( S ) pour interrompre des courants électriques alternatifs dans plusieurs conducteurs qui passent dans le commutateur ( S ),
comprenant des contacts de commutation, dont la séparation pour l'ouverture du commutateur ( S ) s'effectue par un mécanisme de manoeuvre,
comprenant des convertisseurs de mesure, qui sont montés sur les conducteurs et qui produisent une tension de mesure analogique correspondant au courant alternatif,
comprenant une unité ( ETU ) électronique de déclenchement, à laquelle s'applique la tension de mesure, un courant déduit de la tension de mesure est comparé à une condition de courant et, si la condition de courant est satisfaite, déclenche si la séparation des contacts de commutation par le mécanisme de manoeuvre et
comprenant des convertisseurs ( 2a, 2b, 2c ) d'énergie à la manière d'un convertisseur à noyau de fer, qui sont montés sur chaque conducteur, qui appliquent respectivement une tension de convertisseur et auxquels est raccordé respectivement un circuit ( G1, G2, G3 ) redresseur qui charge un condensateur( C ) jusqu'à une tension de condensateur donnée à l'avance, condensateur qui alimente l'alimentation ( 1 ) en courant de l'unité ( ETU ) de déclenchement, **caractérisé en ce que** les circuits redresseurs sont reliés respectivement à une bascule ( M1, M2, M3 ) monostable dont sorties sont mises respectivement, en fonction du fonctionnement du convertisseur ( 2a, 2b, 2c ) d'énergie associé, par des signaux correspondants à la tension de convertisseur respectivement à un niveau donné à l'avance,
**en ce qu'**un dispositif ( SE ) de commutation court-circuite les circuits ( G1, G2, G3 ) redresseurs respectivement lorsque la tension de condensateur donnée à l'avance est atteinte,
**en ce que** chaque bascule ( M1, M2, M3 ) monostable reste mise à niveau si, dans un temps défini par la constante de temps de la bascule, il apparaît un signal à la sortie du convertisseur d'énergie associé,
et **en ce que** le niveau à la sortie de la bascule ( M1, M2, M3 ) sert à contrôler le fonctionnement du convertisseur ( 2a, 2b, 2c ) d'énergie associé.

2. Procédé de contrôle de plusieurs convertisseurs ( 2a, 2b, 2c ) d'énergie d'une alimentation ( 1 ) en courant d'un commutateur ( S ),
dans lequel chaque convertisseur ( 2a, 2b, 2c ) d'énergie est monté respectivement sur un conducteur et produit une tension analogique de convertisseur qui correspond au courant alternatif qui passe dans le conducteur associé et
dans lequel le commutateur ( S )
- est pourvu de contacts de commutation qui, pour l'ouverture du commutateur ( S ), sont séparés l'un de l'autre par un mécanisme de manoeuvre,
- a des convertisseurs de mesure, qui sont montés sur les conducteurs et qui produisent une tension de mesure analogique correspondant au courant alternatif,
- comprend une unité ( ETU ) électronique de déclenchement, à laquelle s'applique la tension de mesure, compare respectivement un courant déduit de la tension de mesure à une condition de courant et, si la condition de courant est satisfaite, déclenche la séparation des contacts de commutation par le mécanisme de manoeuvre, et
- a des circuits ( G1, G2, G3 ) redresseurs, qui sont reliés aux convertisseurs ( 2a, 2b, 2c ) d'énergie et qui chargent un condensateur ( C ) raccordé jusqu'à une tension de condensateur donnée à l'avance, condensateur qui alimente l'alimentation ( 1 ) en courant de l'unité ( ETU ) de déclenchement, **caractérisé en ce que** les circuits redresseurs donnent un signal correspondant à la tension de convertisseur respectivement à une bascule ( M1, M2, M3 ) associée qui est mise par le signal à un niveau donné à l'avance à la sortie de la bascule ( M1, M2, M3 ) et
dans lequel le niveau dépend du fonctionnement du convertisseur ( 2a, 2b, 2c ) d'énergie associé,
**en ce que** le circuit ( G1, G2, G3 ) redresseur est court-circuité respectivement lorsque la tension de condensateur donnée à l'avance est atteinte,
**en ce que** chaque bascule ( M1, M2, M3 ) reste mise au niveau, si dans un temps déterminé par la constante de temps de la bascule, il apparaît un signal à la sortie du convertisseur d'énergie associé et **en ce qu'**on utilise le niveau pour contrôle le convertisseur ( 2an 2b, 2c ) d'énergie.

3. Procédé suivant la revendication 2,
**caractérisé en ce que** l'on émet le niveau sous la forme d'un signal pouvant être transformé numériquement.
